# EUROPEAN PATENT APPLICATION

(11) **EP 4 726 387 A1**
(43) Date of publication of application: **15.04.2026**
(21) Application number: 25203949.0
(22) Date of filing: 23.09.2025
(51) Int. Cl.: G01N 27/87

(54) **MOSAIC DISTRIBUTED COMBINED INTERVAL MAGNETIZATION METHOD AND DETECTION METHOD**

(30) Priority: 11.10.2024 CN 202411418273
(71) Applicant: Deyuan Technology Co., Ltd., Chengdu, Sichuan 610041 (CN)
(72) Inventor: GAO, Bin, Chengdu, 610041 (CN); LUO, Fei, Chengdu, 610041 (CN); JIANG, Shiqiang, Chengdu, 610041 (CN); RU, Gaige, Chengdu, 610041 (CN); ZHANG, Yong, Chengdu, 610041 (CN); XUE, Songwen, Chengdu, 610041 (CN); MA, Qiuping, Chengdu, 610041 (CN); CHENG, Haijun, Chengdu, 610041 (CN); MO, Xiaxiong, Chengdu, 610041 (CN); ZHANG, Zhilin, Chengdu, 610041 (CN); TANG, Chao, Chengdu, 610041 (CN)
(74) Representative: Metida

(57) **Abstract**

A mosaic distributed combined interval magnetization method includes: arranging a magnetization module including magnetic sources disposed at both ends of a yoke and having opposite magnetic properties; arranging a magnetic sensor disposed between the two magnetic sources, where the magnetic sensor is used to detect changes in a direction of a magnetic field of the test piece under detection; wrapping the yoke and the magnetic source to form a non-metallic wrapped structure of a detection component, where the magnetization module is divided into a first magnetization module and a second magnetization module which is symmetrically disposed about a center of the first magnetization module. The method solves the problem of inaccurate detection signals caused by defect diversity, thereby ensuring that defect classification and defect quantification will not occur during subsequent data analysis, which otherwise leads to problems such as unclear defect classification and inaccurate defect quantification.

## Description

### CROSS REFERENCE TO THE RELATED APPLICATIONS

This application is based upon and claims priority to Chinese Patent Application No. 202411418273.8, filed on October 11, 2024.

### TECHNICAL FIELD

The invention relates to a detection technology for surface defects and buried defects of ferromagnetic materials, in particular, to a mosaic distributed combined interval magnetization method and detection method.

### BACKGROUND

Regarding the internal and external quality inspection of pipelines, commonly used inspection technologies include magnetic flux leakage (MFL), EMAT, piezoelectric ultrasound, electromagnetic eddy current, etc. The most widely used is magnetic flux leakage detection technology, which can detect internal and external defects of magnetic materials. It is specifically divided into integral magnetization methods with steel brush structure and magnetic shoe structure. The disadvantages of these two types of structural layouts are mainly:
1. Different magnetization layout: for conventional magnetic flux leakage technology excitation structure, the conventional magnetization method is the overall magnetization method, which is to use the central cylinder, the front and rear sets of steel brushes and the magnetic piece under detection to form a longer magnetic circuit, and the entire pipe section between the front and rear sets of steel brushes is magnetized as a whole. The effective range of the instantaneous detection of the magnetic sensor is the entire pipe section between the steel brushes, and the defects of the entire magnetization pipe section are detected.
2. Longer magnetization circuit: Due to the different layout structures, the axial space needs to reserve space for installing the magnetic sensor assembly, and the radial space needs to reserve space for installing the steel brush component. As a result, the magnetizing circuit of conventional magnetic flux leakage technology is longer. If the test piece needs to be magnetized to a certain magnetic saturation state, the magnetic source with a higher magnetic strength is required.
3. Single magnetic circuit of the excitation structure: the magnetic flux lines are axially distributed in the material, and circumferential defects with a large angle distribution with the direction of the magnetic flux lines can be detected. However, for axial defects arranged parallel to the direction of the magnetic flux lines, the detection sensitivity is low or even cannot be detected.
4. Great difference in equipment structure layouts: conventional magnetic flux leakage detection equipment uses the central cylinder as the yoke part of the magnetic circuit, resulting in strong magnetic property in the central cylinder as a whole. Components susceptible to strong magnetic interference, such as energy supply units (batteries) and electronic hardware, cannot be placed in the central cylinder. This results in low integration, and the equipment is usually composed of several products connected in series so that the equipment is long and heavy.

### SUMMARY

An objective of the invention is to provide a mosaic distributed combined interval magnetization method and detection method, so as to solve the above problems.

To achieve the above objective, the invention provides the following technical solutions:
A mosaic distributed combined interval magnetization method includes:
a magnetization module including magnetic sources disposed at both ends of a yoke and having opposite magnetic properties;
a magnetic sensor disposed between the two magnetic sources, the magnetic sensor being used to detect changes in a direction of a magnetic field of the test piece under detection;
wrapping the yoke and the magnetic source to form a non-metallic wrapped structure of a detection component;
the magnetization module is divided into a first magnetization module and a second magnetization module which is symmetrically disposed about a center of the first magnetization module, wherein
the second magnetizing module on both sides is lower than a horizontal plane of the first magnetizing module to form a groove-shaped configuration.

Preferably, the magnetic source is any one of a polygonal structure, a circular structure and an arc structure.

Preferably, the yoke is a plate-shaped structure of any curvature.

Preferably, the magnetic sensor maintains a preset distance L4 from a detection plane of the detection component.

Preferably, a value of L4 is inversely proportional to a sensitivity of the magnetic sensor.

Preferably, a magnetization region is formed between the two magnetic sources, and the magnetic sensor is vertically located in the magnetization region, wherein
a straight-line distance between the two magnetic sources is L2, a height is L3, and an area of the magnetization region is S=L2*L3.

Preferably, the number of the magnetic sensors perpendicular to the magnetic source is several, wherein
a plurality of magnetic sensors may be disposed along a single-axis linear array or along a two-axis linear array, and may be arranged in a staggered manner.

Preferably, the magnetization module comprises at least three groups of magnetic sources disposed in an axial linear array along the groove-shaped configuration, wherein
the three magnetic sources on a single side along the axial direction have opposite magnetic properties, so as to form two horizontal magnetization regions and two vertical magnetization regions.

Preferably, the magnetic sensors of the two magnetic sources with opposite magnetic properties between the first magnetization module and the second magnetization module are also centered and perpendicular to the magnetic field to form an inclined magnetization region.

Preferably, the four magnetic sensors in two adjacent rows of two magnetic sources disposed in the axial linear array are of different models.

A mosaic distributed combined interval detection method, based on the mosaic distributed combined interval magnetization method according to the above solutions, includes steps of:
S01, passing the test piece under detection through the magnetization module;
S02, forming, by the magnetization module and the test piece under detection, a closed magnetic loop to form a stable magnetization region;
S03, detecting, by the magnetic sensor, a leakage magnetic field formed in one of the magnetization regions by a buried defect on the test piece under detection;
S04, creating a three-dimensional model of the test piece under detection using collected data, and displaying coordinates (X_{L}, Y_{L}, Z_{L}) of a buried defect portion in the three-dimensional model.

Preferably, the magnetization module in the step S01 includes a plurality of inclined magnetization regions, two horizontal magnetization regions and two vertical magnetization regions to form an interval magnetization field;
when the test piece under detection passes through the interval magnetization field, at least the capability of detecting horizontal, vertical and inclined positions of the buried defect portion is possessed.

Preferably, the buried defect portion obtained in the step S04 is located at the coordinates (X_{L}, Y_{L}, Z_{L}) in the three-dimensional model:
the X_{L} is a length of the buried defect portion which is v*t, wherein v is the constant moving speed and t is the consumed time;
the Y_{L} is a width of the buried defect portion;
the Z_{L} is a height of the buried defect portion.

Preferably, the Y_{L} is obtained as a data set including a plurality of data; each of the magnetic sensor in the data set is N, and the width of the buried defect portion detected by each of the N is A; if N consecutive magnetic sensors all detect defect signals in the buried defect portion, then Y_{L}=A*N.

Preferably, the buried defect portion obtained in the step S04 is located at the coordinates (X_{L}, Y_{L}, Z_{L}) in the three-dimensional model, including:
S41, continuously collecting continuous point coordinates of the width of the buried defect portion according to a predetermined window period n: n₁(X_{L1}), n₂(X_{L2}), ..., nₙ(X_{LN});
S42, corresponding to the window period n, continuously collecting points n₁(Y_{L1}), n₂(Y_{L2}), ..., nₙ(Y_{LN});
S43, corresponding to the window period n and L5, continuously collecting points n₁(Z_{L1}), n₂(Z_{L2}), ..., nₙ(Z_{LN});
S44, creating a three-dimensional morphology of the buried defect portion by collecting nₙ(X_{LN}), nₙ(Y_{LN}) and nₙ(Z_{LN}) at the same period.

Preferably, the first magnetization module and the two second magnetization modules respectively form Group One and Group Two, the inclined magnetization region forms Group Three located between Group One and Group Two, and the three-dimensional morphology corresponding to the buried defect portion (51) includes:
Group One: (nₙ(X_{LN}), nₙ(Y_{LN}), nₙ(Z_{LN}))¹;
Group Two: (nₙ(X_{LN}), nₙ(Y_{LN}), nₙ(Z_{LN}))²;
Group Three: (nₙ(X_{LN}), nₙ(Y_{LN}), nₙ(Z_{LN}))³.

In the above technical solutions, the mosaic distributed combined interval magnetization method and detection method provided by the invention has the following beneficial effects:
1. The stable magnetization region formed by a single excitation structure is small, and the sizes of L2 and L3 are both small. The area of the stable magnetization region is less than 10% of the magnetization area of a conventional magnetic flux leakage detection device. The region instantaneously detected by a single encapsulated magnetic sensor is a stable magnetization region, which avoids the superposition effect of defect diversity (multiple defects and multiple defects) in a large magnetization region, which otherwise affects the defect classification and defect quantification during subsequent data analysis and results in unclear defect classification and inaccurate defect quantification.
2. Since when the non-metallic wrapped structure of a single detection component is attached to the test piece under detection, the excitation structure encapsulated in the non-metallic wrapped structure is close to the test piece under detection and the magnetic resistance of air is small, so L1 in the magnetization circuit formed by the invention is small. The dimensional parameter L2 in the magnetization circuit is also much smaller than the distance between the two steel brushes in the conventional magnetic flux leakage detection device. Therefore, the length of the stable closed magnetic circuit formed by the invention is much smaller than the length of the magnetic circuit formed by the conventional magnetic flux leakage detection device. The length of the magnetic circuit of the invention is less than 10% of the length of the magnetic circuit of the conventional magnetic flux leakage detection device.
3. Under the premise of the same magnetic source strength, the structure of the invention will form a stronger magnetization intensity in the material of the test piece under detection. The increase in magnetization intensity not only meets the magnetization requirements of the test piece under detection with a small wall thickness, but also meets the magnetization requirements of the test piece under detection with a large wall thickness.
4. Under the condition of the same magnetization intensity in the ferromagnetic material being detected, the magnetic source required by the structure of the invention has lower magnetic property, so that the adsorption force between the non-metallic wrapped structure of a single detection component and the test piece under detection is reduced. During detection, relative movement occurs between the non-metallic wrapped structure of a single detection component and the test piece under detection, and the friction between the non-metallic wrapped structure and the test piece under detection is reduced, thereby reducing the wear resistance requirements of the potting material of the non-metallic wrapped structure.
5. Since the conventional magnetic flux leakage detection device uses the central cylinder as the yoke part of the magnetic circuit, the central cylinder as a whole has strong magnetic property, and components that are susceptible to strong magnetic interference, such as power supply units (batteries) and electronic hardware, cannot be placed in the central cylinder. The magnetic circuit of the invention is shorter, and under the same magnetization intensity requirement of the test piece under detection, the magnetic source in a single non-metallic wrapped structure has lower magnetic property; furthermore, when the magnetic circuit is established, the central cylinder is not used as part of the magnetic circuit, and the non-metallic wrapped structure of the single detection component is far away from the central cylinder, so that the central cylinder is completely non-magnetic. Therefore, the energy supply unit (battery) and electronic hardware and other components that are susceptible to strong magnetic interference can be placed normally inside the central cylinder of the detection device designed based on the mosaic distributed combined interval magnetization method of the invention.
6. In a limited space, more detection units can be arrayed. For the detection of the same specifications and models, the number of detection units is increased by about 70%, which improves the detection resolution, is conducive to defect imaging, and intuitively reflects the morphological characteristics of the detected defects.

### BRIEF DESCRIPTION OF THE DRAWINGS

In order to describe the embodiments of the present invention or the technical scheme in the prior art more clearly, brief introduction on drawings needed to be used in the embodiment will be made below. It is obvious that the drawings described below are merely some embodiments of the present invention, and those skilled in the technical field further can obtain other drawings according to the drawings.
FIG. 1 is a schematic diagram of a magnetic circuit of a single detection component provided by an embodiment of the invention;
FIG. 2 is a bottom view of FIG. 1 provided by an embodiment of the invention;
FIG. 3 is a schematic diagram of a layout of a mosaic combination interval magnetization provided by an embodiment of the invention;
FIG. 4 is a partial enlarged schematic diagram of a defective part in FIG. 1 provided by an embodiment of the invention;
FIG. 5 is a schematic diagram of a stable magnetization region based on FIG. 2 provided in an embodiment of the invention;
FIGS. 6A and 6B are signal diagrams of different L4 value detection data provided by an embodiment of the invention;
FIGS. 7A and 7B are schematic diagrams of magnetic sensor arrangements provided in an embodiment of the invention;
FIG. 8 is a schematic diagram of a layout of two combination interval magnetizations provided by an embodiment of the invention.

### Description of reference numerals:

1-magnetic source; 2-yoke; 3-magnetic sensor; 4-non-metallic wrapped structure; 5-test piece under detection; 51-buried defect portion; 511-horizontal defect; 512-inclined defect; 513-vertical defect; 6-magnetization region.

### DETAILED DESCRIPTION OF THE EMBODIMENTS

In order to enable those skilled in the art to better understand the technical solution of the invention, the invention will be further described in detail below with reference to the accompanying drawings.

### Embodiment one:

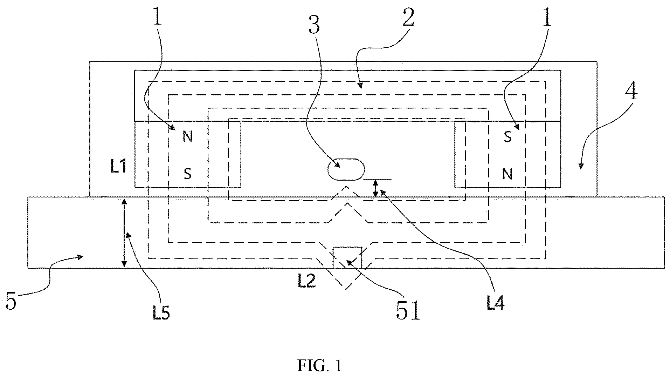

As shown in FIG. 1, a mosaic distributed combined interval magnetization method includes: a magnetization module including magnetic sources 1 disposed at both ends of a yoke 2 and having opposite magnetic properties, the magnetization module being used to detect an end surface of a test piece under detection 5;
a magnetic sensor 3 disposed between the two magnetic sources 1, the magnetic sensor 3 being used to detect changes in a direction of a magnetic field of the test piece under detection 5;
wrapping the yoke 2 and the magnetic source 1 to form a non-metallic wrapped structure 4 of a detection component.

Specifically, the non-metallic wrapped structure 4 in the embodiment is formed by encapsulating a polymer material (polyurethane) with high elasticity and high wear resistance in a mold, such as a large flat plate form, an arc form, etc.

Magnetic source 1: a permanent magnet or a magnetization coil or other device capable of generating magnetic property. The magnetic source 1 is any one of a polygonal structure, a circular structure and an arc structure.

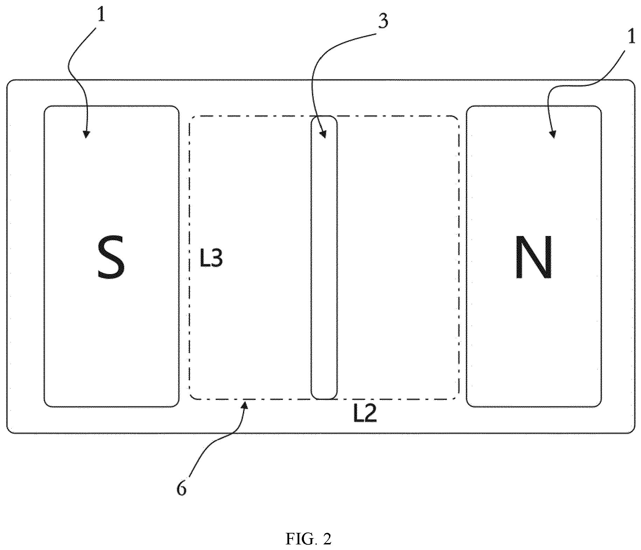

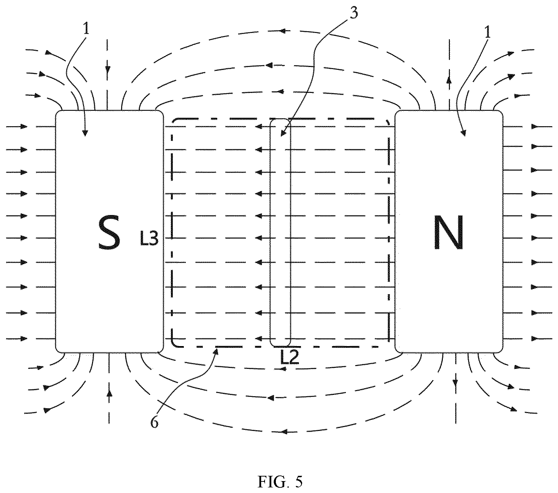

It should be noted that the yoke 2 is a plate-shaped structure of any curvature, and the outer arc top is disposed on the side opposite to the magnetic source 1. The two magnetic sources 1 in the embodiment have the same magnetic strength, opposite magnetic properties, and the same geometric size, so a stable magnetization structure as shown in FIG. 2 is formed between the two magnetic sources 1, namely, a magnetization region 6 (shown in FIG. 5).

Since the conventional magnetic flux leakage detection device uses the central cylinder as the yoke 2 part of the magnetic circuit, the central cylinder as a whole has strong magnetic property, and components that are susceptible to strong magnetic interference, such as power supply units (batteries) and electronic hardware, cannot be placed in the central cylinder. The magnetic circuit of the embodiment is shorter, and under the same magnetization intensity requirement of the test piece under detection 5, the magnetic source 1 in a single non-metallic wrapped structure 4 has lower magnetic property; furthermore, when the magnetic circuit is established, the central cylinder is not used as part of the magnetic circuit, and the non-metallic wrapped structure 4 of the single detection component is far away from the central cylinder.

In a limited space, more detection units can be arrayed. For the detection of the same specifications and models, the number of detection units is increased by about 70%, which improves the detection resolution, is conducive to defect imaging, and intuitively reflects the morphological characteristics of the detected defects.

### Embodiment two:

The single detection component shown in FIG. 1 is entirely formed by encapsulating a polymer material having high elasticity and high wear resistance in a mold. The small-sized excitation structure is potted into the non-metallic wrapped structure 4, and the polymer potting material completely wraps the excitation structure of this part. The magnetic sources 1 are disposed at both ends of the yoke 2, and the magnetic fields formed by the two magnetic sources 1 have opposite north and south poles. The magnetic sensor 3 is disposed in the middle of the two magnetic sources 1, and the magnetic sensor 3 is completely wrapped in the polymer potting material. There is a certain distance L4 between the magnetic sensor 3 and an outer surface of the non-metallic wrapped structure 4 , and a size of the distance L4 is determined according to parameters such as the detection performance of the magnetic sensor 3 and the magnetization intensity. Namely, with reference to FIG. 1, the magnetic sensor 3 maintains a preset distance L4 from a detection plane of the detection component. A value of L4 is inversely proportional to a sensitivity of the magnetic sensor 3.

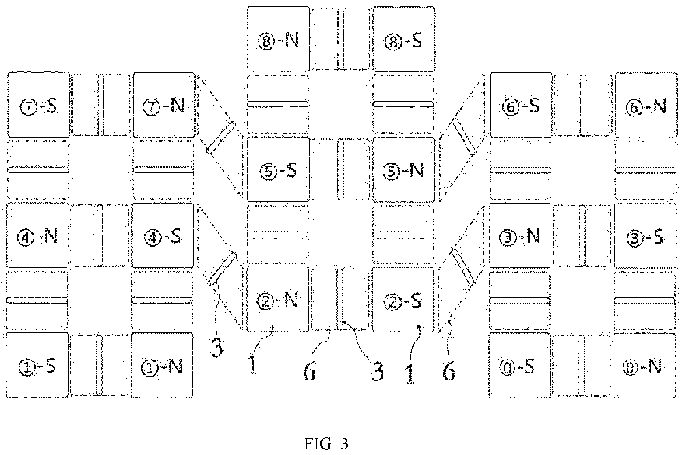

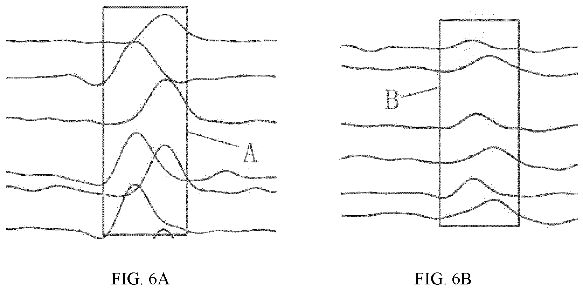

As shown in FIG. 3, on the premise that the same excitation structure forms the same magnetic circuit, different types of magnetic sensors 3 may have different effective detection lift-off ranges (i.e., distance L4) according to different magnetic sensors 3, and the size of the distance L4 is determined according to the effective detection lift-off range values of different types of magnetic sensors 3. Therefore, when the effective detection lift-off L4 of the magnetic sensor 3 is smaller (FIG. 6A), the magnetic sensor 3 is closer to the test piece under detection 5, the greater the leakage magnetic field intensity at this position is, and the stronger the detection signal is. Therefore, when the effective detection lift-off L4 of the magnetic sensor 3 is larger (FIG. 6B), the magnetic sensor 3 is further away from the test piece under detection 5, the smaller the leakage magnetic field intensity at this position is, and the weaker the detection signal is.

It should be noted that when the material of the test piece under detection 5 is different, the magnetization intensity formed in the test piece under detection 5 will also be different; then, different types of magnetic sensors 3 may be selected or the detection lift-off L4 of the magnetic sensor 3 may be changed to ensure that the intensity of the signal measured by the magnetic sensor 3 is adjusted to achieve the best detection effect. For example, when the magnetization intensity formed in the test piece under detection 5 is weak, using a magnetic sensor 3 with higher sensitivity or reducing the distance L4 may enable the magnetic sensor 3 to collect better detection data, which is beneficial to subsequent data analysis.

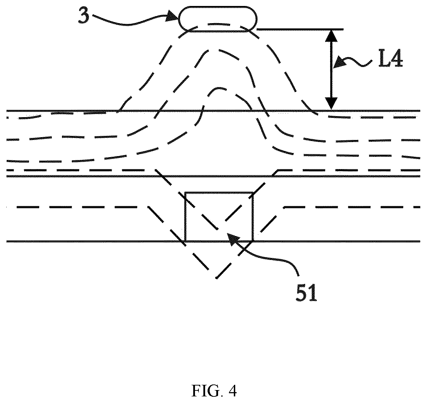

When there is a buried defect 51 in the test piece under detection 5 (as shown in FIG. 4 ), a leakage magnetic field will be formed on the surface of the test piece under detection 5, as shown by the dotted line in the figure. When the material, excitation structure and defect size of the test piece under detection 5 are determined, the intensity of the leakage magnetic field formed at the defect is determined. The closer to the surface of the test piece under detection 5, the greater the intensity of the leakage magnetic field, and the easier it is for the magnetic sensor 3 to detect the information of the leakage magnetic field at that position. The material and excitation structure are determined; when the defect size is larger, the intensity of the leakage magnetic field is larger, and the information of the leakage magnetic field at that position is more easily detected by the magnetic sensor 3, that is:
1) When the distance L4 between the magnetic sensor 3 and the test piece under detection 5 is determined, the leakage magnetic field is small when passing through a small-sized defect; if the detection sensitivity of the magnetic sensor 3 is small at this time, the intensity of the leakage magnetic field is lower than a detection threshold of the magnetic sensor 3, and the magnetic sensor 3 may not detect the small-sized defect at this position. If the magnetic sensor 3 is replaced with one with high detection sensitivity, the intensity of the leakage magnetic field reaches the detection threshold of the magnetic sensor 3, and small-sized defects may be detected.
2) When the detection sensitivity of the magnetic sensor 3 is determined, the size of L4 is reduced: when a small defect occurs, the small defect will not be missed due to the reduction of L4; when a large defect occurs, the magnetic sensor 3 is placed in an area with a larger intensity of the leakage magnetic field because L4 is reduced, and the intensity range of the leakage magnetic field is within an optimal detection range of the magnetic sensor 3. Then, the signal detected by the magnetic sensor 3 is larger, and better detection data is collected, which is beneficial to subsequent data analysis.
3) When 8mm thick 45 steel plate is used, the excitation structure is the same, the sensitivity of magnetic sensor 3 is the same, the distance value of L4 is adjusted, and the same defect is detected, two sets of data are measured; the data signal is shown in FIGS. 6A and 6B below: the value of L4 of FIG. 6A is 1mm smaller than the value of L4 of FIG. 6B, and the amplitude of the defect signal is significantly improved.

### Embodiment three

A magnetization region 6 is formed between the two magnetic sources 1, and the magnetic sensor 3 is vertically located in the magnetization region 6, wherein
a straight-line distance between the two magnetic sources (1) is L2, a height is L3, and an area of the formed stable magnetization region 6 is S=L2*L3.

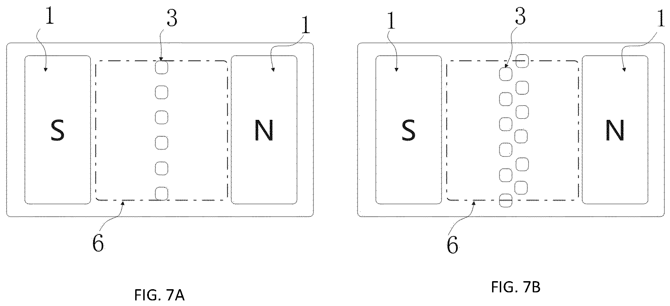

Further, the number of magnetic sensors 3 perpendicular to the magnetic source 1 is several, wherein
a plurality of magnetic sensors 3 may be disposed along a single-axis linear array (FIG. 7A) or along a two-axis linear array, and may be arranged in a staggered manner (FIG. 7B).

The magnetization module is divided into a first magnetization module and a second magnetization module which is symmetrically disposed about a center of the first magnetization module, wherein
the second magnetizing module on both sides is lower than a horizontal plane of the first magnetizing module to form a groove-shaped configuration.

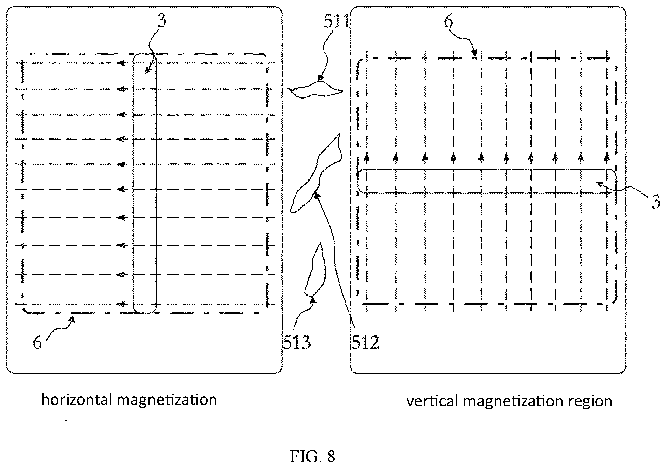

Further, the magnetization module includes at least three groups of magnetic sources 1 disposed in an axial linear array along the groove-shaped configuration, wherein
with reference to FIGS. 3 and 8, the three magnetic sources 1 on a single side along the axial direction have opposite magnetic properties, so as to form two horizontal magnetization regions 6 and two vertical magnetization regions 6. Secondly, the magnetic sensors 3 of the two magnetic sources 1 with opposite magnetic properties between the first magnetization module and the second magnetization module are also centered and perpendicular to the magnetic field to form an inclined magnetization region 6.

In practice, when the defect direction is parallel to the direction of the magnetic flux lines, the leakage magnetic field formed is minimal and negligible. When the defect direction is perpendicular to the direction of the magnetic flux lines, the intensity of the leakage magnetic field is maximum. For the same defect, the defect direction and the direction of the magnetic flux line will form an angle. It should be noted that the value of the above angle is 0°→90°, and the intensity of the leakage magnetic field formed gradually increases, with 0° being the minimum and 90° being the maximum (the direction of the leakage magnetic field of the buried defect portion 51 shown in FIG. 4 , i.e., the V-shaped protrusion of the dotted line).

Therefore, if there is only the magnetization region 6 with a single direction, defects parallel to the direction of the magnetic flux field will definitely be missed. When two magnetization regions 6 are disposed perpendicular to each other, the angle between the defect at any angle and the magnetic flux line is between 45° and 90°, i.e., an inclined defect 512 (FIG. 8), a leakage magnetic field will be formed in at least one of the magnetization regions 6, so that the defect will not be missed.

Moreover, the four magnetic sensors 3 in two adjacent rows of two magnetic sources 1 disposed in the axial linear array are of different models. Different detections are formed by different magnetic sensors 3 in coordination with the magnetization region 6 including two adjacent rows of two magnetic sources 1. That is, the plurality of magnetic sensors 3 located on the same plane detect the leakage magnetic field in the plurality of magnetization regions 6 located on the same plane and take the average value, thereby ensuring that the contour data of the inclined defect 512 obtained by the detected leakage magnetic field is more realistic.

As shown in FIG. 2, the figure shows a schematic diagram of a single detection component; when the single detection components are disposed in multiple groups in a staggered manner, the single detection component are respectively configured with an N pole and an S pole, and the N pole may be in front and the S pole in the back, or the S pole may be in front and the N pole in the back; the arrangement for the polarity of the magnetic source 1 of adjacent single detection components may be the same or opposite, or may be arranged in an integrated combination according to needs. That is, a mosaic distributed combined interval magnetization layout as shown in FIG. 3 is formed, referring to FIG. 3:
1. ①-S, ①-N, ②-N, ②-S, ③-N, ③-S, etc. are all magnetic sources 1 arranged in an array, and respective magnetization regions 6 are formed between the magnetic sources 1; the magnetic sensors 3 are arranged in the middle of the respective magnetization regions 6, and the magnetic sensors 3 are perpendicular to the magnetic flux lines formed in the respective magnetization regions 6; the magnetic sensors 3 may be closely arranged in a single row, staggered in double rows, or arranged in an arc shape according to actual detection requirements.
2. ②-N, ②-S, ⑤-S, ⑤-N, respectively form four magnetization regions 6 between N and S, and the specific details include:
   ②-N and ②-S, ⑤-S and ⑤-N respectively form two horizontally-arranged magnetization regions 6; the horizontally-arranged magnetization regions 6 have a high sensitivity to vertically-distributed defects, but a low sensitivity to horizontally-distributed defects.
   ②-N and ⑤-S, ②-S and ⑤-N respectively form two vertically-arranged magnetization regions 6; the vertically-arranged magnetization regions 6 have a high sensitivity to the detection of horizontally-distributed defects, but a low sensitivity to the detection of vertically-distributed defects.

The two horizontally-arranged magnetization regions 6 and the two vertically-arranged magnetization regions 6 are distributed and combined together, and have a high detection sensitivity for defects distributed at any angle.

3. ②-N, ②-S, ③-N, ④-S, ⑤-S, ⑤-N, ⑥-S, ⑦-N, respectively form four magnetization regions 6 between N and S, and the specific details include:
②-N and ④-S, ⑤-S and ⑦-N respectively form two upper left (inclined) distributed magnetization regions 6; the upper left distributed magnetization region 6 has a higher detection sensitivity to the upper right distributed defects, but a lower detection sensitivity to the upper left distributed defects;
②-S and ③-N, ⑤-N and ⑥-S respectively form two upper right (inclined) distributed magnetization regions 6; the upper right distributed magnetization region 6 has a higher detection sensitivity to the upper left distributed defects, but a lower detection sensitivity to the upper right distributed defects.

The two upper left (inclined) distributed magnetization regions 6 and the two upper right (inclined) distributed magnetization regions 6 are distributed and combined together, and have a high detection sensitivity for defects distributed at any angle.

In summary, the embodiment uses combined analysis to achieve quantitative accuracy of defects of the test piece under detection 5. When the magnetization regions 6 are arranged in four directions, the angle between the defect in any direction and the magnetic flux lines is between 67.5° and 90°. At least one of the magnetization regions 6 in the four directions forms a stronger leakage magnetic field, and a stronger defect signal is detected, thereby improving the quantification accuracy of the defect. The same defect will form leakage magnetic fields of different intensities the magnetization regions 6 in four directions. Four defect models of different intensities are detected. Combined with the planar layout of the four magnetization regions 6 in four directions, comprehensive analysis may be performed to obtain the angle between the defect and the directions of the magnetization regions 6 in four directions, and the planar trend of the defect may be accurately known.

According to actual needs, highly sensitive magnetic sensors 3 should be arranged in the horizontal and vertical magnetization regions 6, which are mainly used to detect the size of quantitative defects. Magnetic sensors that are more sensitive to directionality should be arranged in the other two inclined magnetization regions 6 to measure the directional parameters of the defects. The combined analysis of these two types of data may obtain both more accurate quantitative accuracy and more accurate trends of defects.

### Embodiment 4

Based on Embodiments one and two, a combined interval magnetization detection method for internal detection of low-pressure and low-flow pipelines and pipelines containing inner coatings, the detection method includes the following steps:
S01, the test piece under detection 5 is passed through the magnetization module;
S02, the magnetization module and the test piece under detection 5 form a closed magnetic loop to form a stable magnetization region 6;
S03, the magnetic sensor 3 detects a leakage magnetic field formed in one of the magnetization regions 6 by a buried defect 51 on the test piece under detection 5;
S04, a three-dimensional model of the test piece under detection 5 is created using collected data, and coordinates (X_{L}, Y_{L}, Z_{L}) of a buried defect portion 51 are displayed in the three-dimensional model.

Further, the magnetization module in the step S01 includes a plurality of inclined magnetization regions 6, two horizontal magnetization regions 6 and two vertical magnetization regions 6 to form an interval magnetization field;
when the test piece under detection 5 passes through the interval magnetization field, at least the capability of detecting horizontal, vertical and inclined positions of the buried defect portion 51 is possessed.

Further, the buried defect portion 51 obtained in the step S04 is located at the coordinates (X_{L}, Y_{L}, Z_{L}) in the three-dimensional model:
the X_{L} is a length of the buried defect portion 51 which is v*t, wherein v is the constant moving speed and t is the consumed time;
the Y_{L} is a width of the buried defect portion 51;
the Z_{L} is a height of the buried defect portion 51.

Specifically, X_{L} is a starting value and an ending value of the buried defect portion 51 in the test piece under detection 5 detected by the magnetic sensor 3 in the moving state. The starting value is a data value of the first point where the buried defect portion 51 is located in a total length of the test piece under detection 5 to facilitate locating the section of the test piece under detection 5 where the buried defect portion 51 is located;
with reference to FIG. 8, it can be known that here, the plurality of inclined magnetization regions 6 , the two horizontal magnetization regions 6 and the two vertical magnetization regions 6 constitute the interval magnetization field pairs Y_{L} and Z_{L} to obtain the depth and width of the buried defect portion 51 for detection. This ensures a good detection rate for defects in any direction without missed detections.

It should be noted that the Y_{L} is obtained as a data set including a plurality of data; each of the magnetic sensor 3 in the data set is N, and the width of the buried defect portion 51 detected by each of the N is A; if N consecutive magnetic sensors 3 all detect defect signals in the buried defect portion 51, then Y_{L}=A*N. Since different magnetic sensors 3 are placed in the four types of magnetization regions 6 in the embodiment, different defect characteristics may be detected emphatically, and the number of magnetic sensors 3 arranged between the two magnetic sources 1 in the embodiment may be shown in FIG. 7A or shown in FIG. 7B; the actual Y_{L} in the detection process should be the value of A*N.

The buried defect portion 51 obtained in the step S04 is located at the coordinates (X_{L}, Y_{L}, Z_{L}) in the three-dimensional model, including:
S41, continuous point coordinates of the width of the buried defect portion 51 are continuously collected according to a predetermined window period n: n₁(X_{L1}), n₂(X_{L2}), ..., nₙ(X_{LN});
S42, corresponding to the window period n, points n₁(Y_{L1}), n₂(Y_{L2}), ..., nₙ(Y_{LN}) are continuously collected;
S43, corresponding to the window period n and L5, points n₁(Z_{L1}), n₂(Z_{L2}), ..., nₙ(Z_{LN}) are continuously collected;
S44, a three-dimensional morphology of the buried defect portion (51) is created by collecting nₙ(X_{LN}), nₙ(Y_{LN}) and nₙ(Z_{LN}) at the same period.

It should be noted that the first magnetization module and the two second magnetization modules respectively form Group One and Group Two, the inclined magnetization region 6 forms Group Three located between Group One and Group Two, and the three-dimensional morphology corresponding to the buried defect portion 51 includes:
Group One: (nₙ(X_{LN}), nₙ(Y_{LN}), nₙ(Z_{LN}))¹;
Group Two: (nₙ(X_{LN}), nₙ(Y_{LN}), nₙ(Z_{LN}))²;
Group Three: (nₙ(X_{LN}), nₙ(Y_{LN}), nₙ(Z_{LN}))³.

Specifically, by collecting points in the continuous window period, the plane data of the first point of Group one, Group Two and Group Three are connected to form a three-dimensional morphology. Through combined magnetic detection, the horizontal defects 511, inclined defects 512 and vertical defects 513 in the pipeline are obtained simultaneously.

The above only describes certain exemplary embodiments of the invention by way of illustration. It is undoubted that those skilled in the art can modify the described embodiments in various different ways without departing from the spirit and scope of the invention. Therefore, the above drawings and descriptions are illustrative in nature and should not be construed as limiting the scope of protection of the claims of the invention.

## Claims

1. A mosaic distributed combined interval magnetization method, comprising:
arranging a magnetization module comprising two magnetic sources disposed at both ends of a yoke and having opposite magnetic properties;
arranging a magnetic sensor disposed between the two magnetic sources, wherein the magnetic sensor is configured to detect changes in a direction of a magnetic field of a test piece under detection; and
wrapping the yoke and the two magnetic sources to form a non-metallic wrapped structure of a detection component;
wherein the magnetization module is divided into a first magnetization module and a second magnetization module, wherein the second magnetization module is symmetrically disposed about a center of the first magnetization module;
the second magnetizing module on both sides is lower than a horizontal plane of the first magnetizing module to form a groove-shaped configuration;
a magnetization region is formed between the two magnetic sources, and the magnetic sensor is vertically located in the magnetization region;
a straight-line distance between the two magnetic sources is L2, a height is L3, and an area of the magnetization region is S=L2*L3;
the magnetization module comprises at least three groups of magnetic sources disposed in an axial linear array along the groove-shaped configuration;
three magnetic sources on a single side along an axial direction have opposite magnetic properties to form two horizontal magnetization regions and two vertical magnetization regions;
magnetic sensors of the two magnetic sources with opposite magnetic properties between the first magnetization module and the second magnetization module are also centered and perpendicular to the magnetic field to form an inclined magnetization region.

2. The mosaic distributed combined interval magnetization method according to claim 1, wherein the magnetic source is any one of a polygonal structure, a circular structure and an arc structure.

3. The mosaic distributed combined interval magnetization method according to claim 1, wherein the yoke is a plate-shaped structure of any curvature.

4. The mosaic distributed combined interval magnetization method according to claim 1, wherein the magnetic sensor maintains a detection distance L4 from a horizontal plane of the detection component.

5. The mosaic distributed combined interval magnetization method according to claim 4, wherein a value of L4 is inversely proportional to a sensitivity of the magnetic sensor.

6. The mosaic distributed combined interval magnetization method according to claim 1, wherein a plurality of the magnetic sensors are disposed perpendicular to the magnetic source, wherein
the plurality of magnetic sensors are disposed along a single-axis linear array, or the plurality of magnetic sensors are disposed along a two-axis linear array in a staggered manner.

7. The mosaic distributed combined interval magnetization method according to claim 1, wherein four magnetic sensors in two adjacent rows of two magnetic sources disposed in the axial linear array are of different models.

8. A mosaic distributed combined interval detection method, based on the mosaic distributed combined interval magnetization method according to any one of claims 1-7, comprising steps of:
S01, passing the test piece under detection through the magnetization module;
S02, forming, by the magnetization module and the test piece under detection, a closed magnetic loop to form a stable magnetization region;
S03, detecting, by the magnetic sensor, a leakage magnetic field formed in one of the magnetization regions by a buried defect portion on the test piece under detection; and
S04, creating a three-dimensional model of the test piece under detection using collected data, and displaying coordinates (X_{L}, Y_{L}, Z_{L}) of the buried defect portion in the three-dimensional model.

9. The mosaic distributed combined interval detection method according to claim 8, wherein the magnetization module in the step S01 comprises a plurality of inclined magnetization regions, two horizontal magnetization regions and two vertical magnetization regions to form an interval magnetization field; and
when the test piece under detection passes through the interval magnetization field, at least a capability of detecting horizontal, vertical and inclined positions of the buried defect portion is possessed.

10. The mosaic distributed combined interval detection method according to claim 8, wherein the buried defect portion obtained in the step S04 is located at the coordinates (X_{L}, Y_{L}, Z_{L}) in the three-dimensional model:
the X_{L} is a length of the buried defect portion and is v*t, wherein v is a constant moving speed and t is a consumed time;
the Y_{L} is a width of the buried defect portion; and
the Z_{L} is a height of the buried defect portion.

11. The mosaic distributed combined interval detection method according to claim 10, wherein the Y_{L} is obtained as a data set comprising a plurality of data; each of the magnetic sensor in the data set is N, and the width of the buried defect portion detected by each of the N is A; when N consecutive magnetic sensors all detect defect signals in the buried defect portion, Y_{L}=A*N.

12. The mosaic distributed combined interval detection method according to claim 8, wherein the buried defect portion obtained in the step S04 is located at the coordinates (X_{L}, Y_{L}, Z_{L}) in the three-dimensional model, and the step S04 comprises:
S41, continuously collecting continuous point coordinates of the width of the buried defect portion according to a predetermined window period n: n₁(X_{L1}), n₂(X_{L2}), ..., nₙ(X_{LN});
S42, corresponding to the predetermined window period n, continuously collecting points n₁(Y_{L1}), n₂(Y_{L2}), ..., nₙ(Y_{LN});
S43, corresponding to the predetermined window period n and L5, continuously collecting points n₁(Z_{L1}), n₂(Z_{L2}), ..., nₙ(Z_{LN}); and
S44, creating a three-dimensional morphology of the buried defect portion by collecting nₙ(X_{LN}), nₙ(Y_{LN}) and nₙ(Z_{LN}) at a same period.

13. The mosaic distributed combined interval detection method according to claim 12, wherein the first magnetization module and two second magnetization modules respectively form Group One and Group Two, the inclined magnetization region forms Group Three located between the Group One and the Group Two, and the three-dimensional morphology corresponding to the buried defect portion comprises:
Group One: (nₙ(X_{LN}), nₙ(Y_{LN}), nₙ(Z_{LN}))¹;
Group Two: (nₙ(X_{LN}), nₙ(Y_{LN}), nₙ(Z_{LN}))²; and
Group Three: (nₙ(X_{LN}), nₙ(Y_{LN}), nₙ(Z_{LN}))³.
